# DEMANDE DE BREVET EUROPEEN

(11) **EP 4 671 854 A1**
(43) Date de publication de la demande: **31.12.2025**
(21) Numéro de dépôt: 25184258.9
(22) Date de dépôt: 20.06.2025
(51) Int. Cl.: G02F 1/025, G02F 1/21, G02F 1/225

(54) **MODULATEUR ELECTRO-OPTIQUE DE MACH-ZEHNDER COMPORTANT UNE LIGNE COPLANAIRE RF A TRANSMISSION AMELIOREE**

(30) Priorité: 24.06.2024 FR 2406757
(71) Demandeur: Commissariat à l'Energie Atomique et aux Energies Alternatives, 75015 Paris (FR)
(72) Inventeur: MYKO, André, 38054 GRENOBLE CEDEX 09 (FR); VIROT, Léopold, 38054 GRENOBLE CEDEX 09 (FR); BLAMPEY, Benjamin, 38054 GRENOBLE CEDEX 09 (FR)
(74) Mandataire: Santarelli

(57) **Abrégé**

L'invention porte sur un modulateur électro-optique de Mach-Zehnder (1) comportant un diviseur d'entrée, des premier et deuxième guides d'onde principaux (10p, 20p), et un combineur de sortie (3). Il comporte également une première ligne coplanaire RF (30) associée au premier guide d'onde principal (10p). Il comporte enfin un premier guide d'onde additionnel (10a), non couplé au diviseur d'entrée (2) et au combineur de sortie (3), et présentant un positionnement vis-à-vis d'une piste centrale (33), un dimensionnement et un profil de dopage symétriques à ceux du premier guide d'onde principal (10p), par rapport à un plan de symétrie (Ps), orthogonal au plan principal (XY), parallèle aux premiers guides d'onde principal (10p) et additionnel (10a), et passant par un centre de la piste centrale (33).

## Description

### DOMAINE TECHNIQUE

Le domaine de l'invention est celui des modulateurs électro-optiques de Mach-Zehnder comportant au moins une ligne coplanaire RF de type masse/signal/masse (GSG, pour *Ground, Signal, Ground* en anglais).

### ÉTAT DE LA TECHNIQUE ANTÉRIEURE

Les modulateurs électro-optiques de Mach-Zehnder (MZM, pour *Mach-Zehnder Modulator,* en anglais) sont un composant essentiel dans les systèmes optoélectroniques de type telecom ou datacom. Ils permettent de coder une information provenant d'une source électrique dans une porteuse optique en faisant varier son intensité ou amplitude.

**Un** modulateur de Mach-Zehnder comporte habituellement un diviseur d'entrée, deux guides d'onde qui forment les bras du modulateur, et un combineur de sortie. Ainsi, une onde optique incidente de puissance Pᵢₙ qui circule dans le guide d'onde d'entrée est divisée en deux ondes optiques de puissance Pᵢₙ/2 dans les bras du modulateur. Chaque bras est dopé de manière à former une jonction pn, une jonction pin, voire une capacité MOS.

Le fait de générer un champ électrique dans au moins l'un des bras permet de modifier, par effet électro-optique, l'indice de réfraction de celui-ci, et donc la phase de l'onde optique qui y circule. Le modulateur d'intensité qu'est le modulateur de Mach-Zehnder est donc formé d'au moins un modulateur de phase associé à l'un des bras du modulateur. A l'extrémité des bras, un combineur reçoit les deux ondes optiques déphasées l'une par rapport à l'autre, qui interfèrent alors de manière constructive ou destructive, selon le déphasage entre les deux ondes optiques, pour former l'onde optique de sortie dont l'amplitude est ainsi modulée.

Pour appliquer un champ électrique au bras du modulateur, le modulateur MZM peut comporter une ligne coplanaire RF (également appelée CPW, pour *Coplanar Waveguide,* en anglais), laquelle est habituellement formée de trois pistes conductrices de type GSG (*Ground, Signal, Ground,* en anglais) disposées au-dessus du bras. La piste conductrice centrale (Signal) est porteuse du signal électrique, et les deux pistes conductrices latérales (Ground) sont connectées à la masse. Lorsque le modulateur de Mach-Zehnder ne comporte qu'une ligne coplanaire RF et donc lorsqu'une seule tension de commande est appliquée, celui-ci présente alors une configuration dite *Single Drive.* En revanche, lorsqu'il comporte deux lignes coplanaires RF (une par bras) et que deux tensions de commande sont appliquées, il présente alors une configuration dite *Dual Drive.*

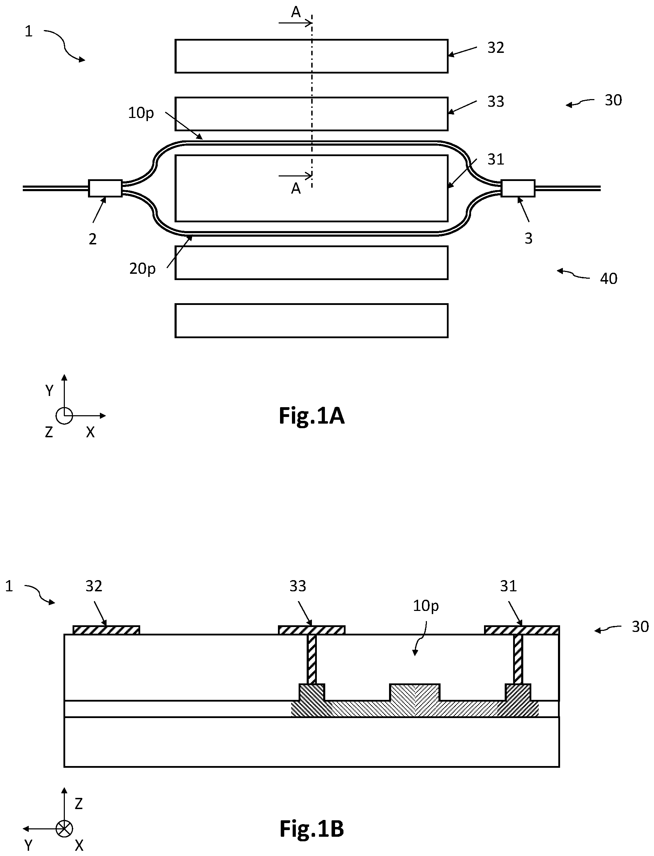

Les figures 1A et 1B sont des vues schématiques et partielles, en vue de dessus et en coupe transversale selon la ligne de coupe AA, d'un modulateur de Mach-Zehnder selon un exemple de l'art antérieur.

Le modulateur de Mach-Zehnder 1 comporte donc un diviseur 2, deux guides d'onde principaux 10p, 20p qui forment les bras du modulateur, et un combineur 3. La configuration représentée est de type *Dual Drive,* de sorte que le modulateur 1 comporte une ligne coplanaire RF 30 associée au guide d'onde principal 10p, et une ligne coplanaire RF 40 associée au guide d'onde principal 20p.

Le guide d'onde principal 10p présente une forme de guide à nervure, où se situe ici une jonction pn. La ligne coplanaire RF 30 est formée de trois pistes conductrices coplanaires : une piste centrale 33 à laquelle est appliqué le signal électrique de modulation, et deux pistes latérales 31, 32 mises au potentiel de la masse. Le guide d'onde principal 10p est situé entre les pistes 31 et 33, qui assurent également la polarisation de la jonction pn.

Il est connu que le dimensionnement du guide d'onde principal et de la ligne coplanaire RF à laquelle il est associé peut impacter les performances du modulateur de Mach-Zehnder. Il existe donc un besoin de disposer d'un modulateur de Mach-Zehnder dont les performances sont améliorées.

### EXPOSÉ DE L'INVENTION

L'invention a pour objectif de remédier au moins en partie aux inconvénients de l'art antérieur, et plus particulièrement de proposer un modulateur de Mach-Zehnder comportant au moins une ligne coplanaire RF de type GSG qui présente des performances améliorées.

Pour cela, l'objet de l'invention est un modulateur électro-optique de Mach-Zehnder, comportant : un diviseur d'entrée ; des premier et deuxième guides d'onde dits principaux, couplés au diviseur d'entrée, dont au moins le premier guide d'onde principal comporte un profil de dopage formant une jonction semiconductrice ou une capacité MOS, s'étendant longitudinalement dans un plan principal du modulateur ; un combineur de sortie, couplé aux deux guides d'onde principaux ; et au moins une première ligne coplanaire RF, associée au premier guide d'onde principal, formée de trois pistes conductrices, coplanaires, et parallèles au premier guide d'onde principal : une piste centrale et une première et une deuxième pistes latérales situées de part et d'autre de la piste centrale, le premier guide d'onde principal étant situé entre la piste centrale et la première piste latérale.

Selon l'invention, le modulateur comporte également un premier guide d'onde additionnel : s'étendant de manière parallèle au premier guide d'onde principal ; non couplé au diviseur d'entrée et au combineur de sortie ; situé en regard et entre la piste centrale et la deuxième piste latérale ; et présentant un positionnement vis-à-vis de la piste centrale, un dimensionnement et un profil de dopage symétriques à ceux du premier guide d'onde principal, par rapport à un plan de symétrie, orthogonal au plan principal, parallèle aux premiers guides d'onde principal et additionnel, et passant par un centre de la piste centrale.

Certains aspects préférés mais non limitatifs de ce modulateur de Mach-Zehnder sont les suivants.

La piste centrale peut être symétrique vis-à-vis du plan de symétrie.

Les pistes latérales peuvent être symétriques par rapport au plan de symétrie.

Les premiers guides d'onde principal et additionnel peuvent être des guides d'onde à nervure.

Le modulateur peut comporter, pour les premiers guides d'onde principal et additionnel, des parties latérales s'étendant à partir des nervures, réalisées en le même matériau semiconducteur dopé que les nervures, et destinées à polariser la jonction semiconductrice ou la capacité mos, les parties latérales associées au guide d'onde additionnel présentant un positionnement, un dimensionnement et un profil de dopage symétriques à celles associées au premier guide d'onde principal par rapport au plan de symétrie.

Le modulateur peut comporter en outre une deuxième ligne coplanaire RF associée au deuxième guide d'onde principal, et un deuxième guide d'onde additionnel : s'étendant de manière parallèle au deuxième guide d'onde principal ; non couplé au diviseur d'entrée et au combineur de sortie ; situé en regard et entre une piste centrale et une deuxième piste latérale de la deuxième ligne coplanaire RF ; présentant un positionnement vis-à-vis de la piste centrale de la deuxième ligne coplanaire RF, un dimensionnement et un profil de dopage symétriques à ceux du deuxième guide d'onde principal, par rapport à un plan de symétrie, orthogonal au plan principal, parallèle aux deuxièmes guides d'onde principal et additionnel, et passant par un centre de la piste centrale de la deuxième ligne coplanaire RF.

Les premiers guides d'onde principal et additionnel peuvent comporter chacun une jonction pn.

Les guides d'onde principaux et additionnel(s) peuvent être réalisés à partir de silicium.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1A, déjà décrite, est une vue de dessus, schématique et partielle, d'un modulateur de Mach-Zehnder selon un exemple de l'art antérieur ;
la figure 1B, déjà décrite, est une vue en coupe transversale, schématique et partielle, d'une partie du modulateur de Mach-Zehnder de la fig.1A selon la ligne de coupe AA ;
la figure 2A est une vue de dessus, schématique et partielle, d'un modulateur de Mach-Zehnder selon un mode de réalisation ;
la figure 2B est une vue en coupe transversale, schématique et partielle, d'une partie du modulateur de Mach-Zehnder de la fig.2A selon la ligne de coupe AA ;
la figure 3 illustre un spectre de transmission d'une ligne coplanaire RF d'un modulateur de Mach-Zehnder similaire à celui des fig.1A et 1B ;
la figure 4 est une vue en coupe transversale, schématique et partielle, d'une partie du modulateur de Mach-Zehnder de la fig.2A selon la ligne de coupe AA ;
la figure 5A est une vue de dessus, schématique et partielle, d'un modulateur de Mach-Zehnder selon un exemple de l'art antérieur ;
la figure 5B est une vue en coupe transversale, schématique et partielle, d'une partie d'un modulateur de Mach-Zehnder selon un mode de réalisation, qui est similaire à celui de la fig.5A mais qui comporte un guide d'onde additionnel ;
la figure 6 illustre les spectres de transmission de la ligne coplanaire RF des modulateurs de Mach-Zehnder des fig.5A et 5B.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

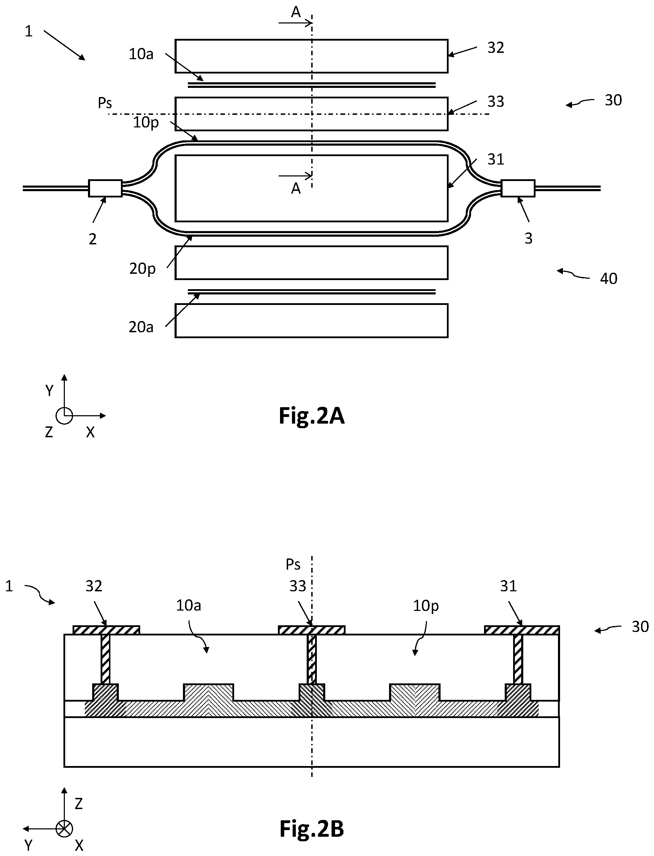

Les figures 2A et 2B sont des vues schématiques et partielles, en vue de dessus (fig.2A) et en coupe transversale selon la ligne de coupe AA (fig.2B), d'un modulateur de Mach-Zehnder 1 selon un mode de réalisation.

On définit ici et pour la suite de la description un repère direct tridimensionnel orthogonal XYZ, où les axes X et Y forment un plan parallèle au plan principal du modulateur 1 dans lequel s'étendent les guides d'onde 10, 20, et où l'axe Z est orienté de la couche support vers les lignes coplanaires RF. Dans la suite de la description, les termes « inférieur » et « supérieur » s'entendent comme étant relatifs à un positionnement croissant suivant la direction +Z.

Le modulateur électro-optique 1 de Mach-Zehnder (MZM) est adapté à moduler en amplitude une onde optique incidente. Pour cela, il comporte *a minima* : un diviseur 2 pour recevoir une onde optique incidente et la diviser en deux ondes optiques ; des premier et deuxième guides d'onde principaux 10p, 20p couplés au diviseur 2 ; et un combineur 3 couplé aux deux guides d'onde principaux 10p, 20p pour recevoir les ondes optiques et les recombiner par interférence. Les guides d'onde principaux 10p, 20p s'étendent dans un plan principal du modulateur 1 parallèle au plan XY.

Le diviseur 2 reçoit l'onde optique incidente de puissance Pᵢₙ et la divise en deux ondes optiques d'égale puissance Pᵢₙ/2 qui circulent ensuite dans les guides d'onde principaux 10p, 20p. Le combineur 3 est couplé aux deux guides d'onde principaux 10p, 20p pour recevoir les deux ondes optiques qui se recombinent alors par interférence.

Au moins le premier guide d'onde principal 10p comporte un profil de dopage formant une jonction pn (cas d'un modulateur à déplétion), une jonction pin (cas d'un modulateur à injection) ou une capacité MOS (modulateur à accumulation de charges). Dans cet exemple, le profil de dopage forme une jonction pn qui s'étend suivant l'axe longitudinal du guide d'onde principal 10p. La longueur de la jonction pn associée à la longueur de la ligne coplanaire RF 30 définit la longueur de modulation du guide d'onde principal 10p.

Le modulateur de Mach-Zehnder 1 comporte au moins une première ligne coplanaire RF 30, adaptée à appliquer au premier guide d'onde principal 10p un champ électrique modifiant son indice de réfraction et modulant ainsi la phase de l'onde optique qui y circule (dans le but de générer un déphasage avec l'onde optique circulant dans le guide d'onde principal 20p).

Une « ligne coplanaire RF » correspond à une configuration d'électrodes, ici trois pistes parallèles et coplanaires, réalisées en un matériau électriquement conducteur, adaptées à transmettre le signal électrique haute fréquence qui est utilisé pour appliquer une tension de modulation aux électrodes du modulateur. Le terme « RF », pour Radio Fréquence, se rapporte aux fréquences élevées à laquelle le signal électrique oscille : par exemple, de quelques GHz à plusieurs dizaines de GHz en fonction des applications. La ligne coplanaire RF se compose plus précisément de deux pistes latérales (dites *Ground* lorsqu'elles sont mises au potentiel de la masse) et d'une piste centrale (dite *Signal* car alimentée par le potentiel électrique RF).

On comprend que la ligne coplanaire RF 30 est de type GSG, pour *Ground, Signal, Ground* en anglais. Le modulateur 1 présente ici une configuration *Dual Drive* puisqu'il comporte deux lignes coplanaires RF 30, 40, ici de type GSGSG. En variante, il peut présenter une configuration *Single Drive* et donc ne comporter qu'une seule ligne coplanaire RF 30.

La première ligne coplanaire RF 30 est située en regard du premier guide d'onde principal 10p suivant un axe vertical Z. Les trois pistes conductrices 31, 32, 33 s'étendent longitudinalement de manière parallèle au premier guide d'onde principal 10p. Les première et deuxième pistes latérales 31, 32 sont situées, dans un plan XY, de part et d'autre de la piste centrale 33. Le guide d'onde principal 10p est situé, en projection dans le plan XY passant par les pistes conductrices 31, 32, 33, entre la piste centrale 33 et la première piste latérale 31. Le guide d'onde principal 10p n'est donc pas situé exactement à la perpendiculaire de la piste centrale 33. Notons que la première piste latérale 31 est celle située entre les deux guides d'onde principaux 10p, 20p, mais en variante il pourrait s'agir de la piste latérale opposée (ici la piste latérale 32).

Les inventeurs ont constaté que la ligne coplanaire RF 30, dans le cas d'un modulateur de Mach-Zehnder similaire à celui des fig.1A et 1B, peut présenter des propriétés en transmission qui peuvent être dégradées. En effet, le spectre de transmission de la ligne coplanaire RF, c'est-à-dire l'évolution du paramètre S₂₁ en fonction de la fréquence du signal électrique RF, montre la présence à intervalle régulier de creux de transmission. Ces creux de transmission dégradent ainsi les propriétés du modulateur de Mach-Zehnder 1 à transmettre des données rapidement.

Pour améliorer les propriétés en transmission de la ligne coplanaire RF 30 et donc les performances du modulateur de Mach-Zehnder 1, celui-ci comporte un premier guide d'onde additionnel 10a, associé à la première ligne coplanaire RF 30. Ce guide d'onde additionnel 10a n'est pas couplé optiquement au diviseur 2 et au combineur 3, de sorte qu'aucune onde optique ne circule dans celui-ci. Il s'étend de manière parallèle au premier guide d'onde principal 10p, et donc également aux pistes conductrices 31, 32, 33 de la ligne coplanaire RF 30. Par ailleurs, il est situé ici en regard et entre (donc en projection dans le plan principal) la piste centrale 33 et la deuxième piste latérale 32.

Enfin, le guide d'onde additionnel 10a présente un positionnement vis-à-vis de la piste centrale 33, un dimensionnement et un profil de dopage symétriques à ceux du guide d'onde principal 10p, par rapport à un plan de symétrie Ps, orthogonal au plan principal XY, parallèle aux premiers guides d'onde principal 10p et additionnel 10a, et passant par la piste centrale 33 (et plus précisément passant par le centre géométrique de la piste centrale 33). La piste centrale 33 est elle-même symétrique vis-à-vis du plan de symétrie Ps.

Il apparaît que la présence d'un tel guide d'onde additionnel 10a, disposé à côté du premier guide d'onde principal 10p et associé à la même première ligne coplanaire RF 30, permet de symétriser l'environnement vu par le champ électrique généré par la ligne coplanaire RF 30, en termes de répartition spatiale de l'indice de réfraction et plus largement de la permittivité. Ainsi, le champ électrique présente une distribution spatiale symétrique de part et d'autre de la piste centrale 33, et les modes de propagation du champ électrique (ici *CPW mode,* ou *even mode*) parcourent la ligne coplanaire RF 30 dans un environnement symétrique. Ils présentent donc les mêmes propriétés de transmission, ce qui se traduit alors par une réduction des creux de transmission mentionnés précédemment. La ligne coplanaire RF présente donc de meilleures propriétés de transmission, ce qui améliore également les performances du modulateur de Mach-Zehnder.

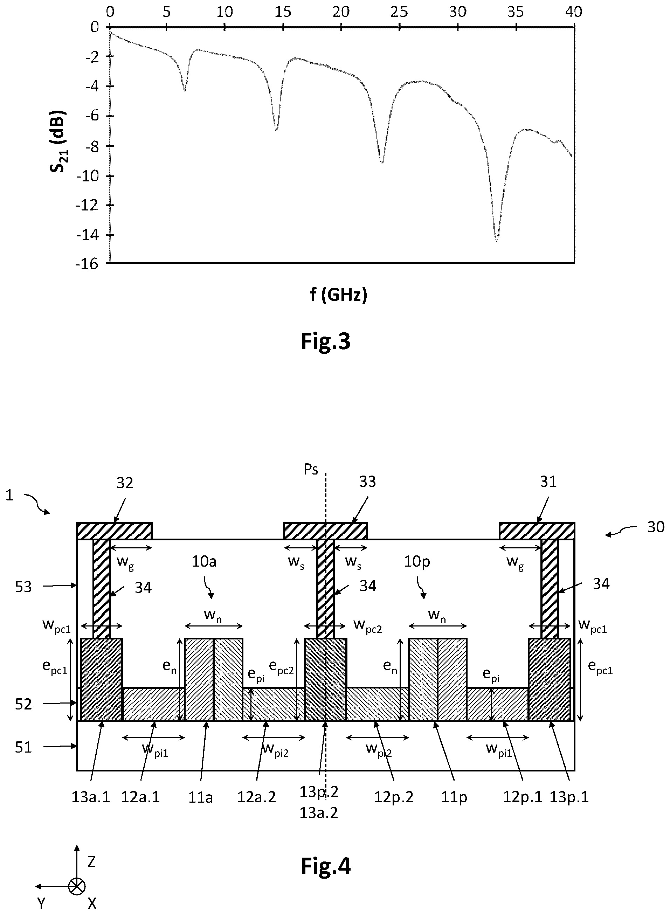

La figure 3 illustre un spectre de transmission de la ligne coplanaire RF d'un modulateur de Mach-Zehnder similaire à celui des fig.1A et 1B. Ici, à la différence du modulateur selon l'invention, le modulateur ne comporte pas de guide d'onde additionnel, de sorte que le mode de propagation du champ électrique généré par la ligne coplanaire RF ne se propage pas dans un même environnement selon qu'on est d'un côté ou de l'autre de la piste centrale.

Le modulateur de Mach-Zehnder est configuré pour mettre la transmission du signal électrique selon le mode de propagation CPW (également appelé *even mode*), pour une impédance de 50 Ω. Le modulateur présente ici une longueur de 2mm dans une configuration GSG sans symétrisation de la ligne coplanaire.

Comme indiqué précédemment, le spectre de transmission présente, à intervalle régulier, des creux de transmission, associés éventuellement à des interférences de Bragg. Ces creux peuvent correspondre à un transfert de puissance du mode de propagation voulu (ici *even mode*) du champ électrique, vers un mode non souhaité (ici *odd mode*).

Il apparaît donc que, comme les inventeurs l'ont constaté, la présence d'un guide d'onde additionnel tel que défini précédemment permet de réduire voire d'écarter la présence de ces creux de transmission, améliorant ainsi les performances de la ligne coplanaire RF et donc celles du modulateur de Mach-Zehnder.

La figure 4 est une vue schématique et partielle d'une partie du modulateur de Mach-Zehnder 1 illustré sur les fig.2A et 2B, en coupe transversale selon la ligne de coupe AA. Cette fig.4 est identique à la fig.2B et permet d'illustrer plus en détail certains paramètres dimensionnels du modulateur 1.

Le modulateur de Mach-Zehnder 1 est ici un composant d'une puce photonique qui contient un circuit photonique intégré. Celui-ci comprend des composants optiques passifs et/ou actifs tels que des guides d'onde, des diodes, des modulateurs, des multiplexeurs couplés optiquement les uns aux autres, etc... Il comporte une couche support sur laquelle reposent les guides d'onde 10p, 20p, 10a, 20a du modulateur 1. Dans cet exemple, le modulateur de Mach-Zehnder 1 est réalisé en technologie silicium, mais d'autres technologies sont possibles (LiNbO₃ par exemple).

Le modulateur comporte une couche support 51 réalisée en un matériau électriquement isolant. Il s'agit ici d'une couche d'oxyde enterré (BOX) d'un substrat silicium sur isolant (SOI). Les guides d'onde 10p, 20p, 10a, 20a reposent sur la couche support, et sont réalisés à partir d'une couche semiconductrice 52 en un matériau cristallin, ici du silicium monocristallin, qui présente un indice de réfraction plus élevé que celui des couches environnantes.

Le guide d'onde principal 10p et le guide d'onde additionnel 10a sont des guides d'onde à nervure : ils comportent ainsi une nervure 11p, 11a (*rib* en anglais) formée à partir d'une base (*slab* en anglais) de plus faible épaisseur. La jonction pn se situe au niveau de la nervure. Les guides d'onde 10p, 10a comportent chacun des parties latérales de polarisation de la jonction pn.

Concernant le guide d'onde principal 10p :
- la nervure 11p présente une largeur wₙ et une épaisseur eₙ. La jonction pn se situe sensiblement au centre de la nervure, mais elle pourrait se situer à l'interface entre la nervure et l'une ou l'autre des parties latérales ;
- une première partie latérale intermédiaire 12p.1, s'étend à partir de la nervure 11p, dopée ici de type p, d'épaisseur eₚᵢ inférieure à eₙ et de largeur wₚᵢ₁ ; suivie par une première partie latérale de contact 13p.1, dopée ici p+, d'épaisseur e_{pc1} et de largeur w_{pc1}, au contact de laquelle vient un via conducteur 34 connecté à la première piste latérale 31 ;
- une deuxième partie latérale intermédiaire 12p.2, s'étend à partir de l'autre côté de la nervure 11p, dopée ici de type n, d'épaisseur eₚᵢ et de largeur wₚᵢ₂ (de préférence égale à wₚᵢ₁) ; suivie par une deuxième partie latérale de contact 13p.2, dopée ici n+, d'épaisseur e_{pc2} et de largeur w_{pc2}, au contact de laquelle vient un via conducteur 34 connecté à la piste centrale 33.

Le guide d'onde additionnel 10a est associé à la ligne coplanaire RF 30. Il est positionné et dimensionné de manière symétrique au guide d'onde principal 10p vis-à-vis du plan de symétrie Ps. Celui-ci passe par le centre de la piste centrale 33, est orthogonal au plan XY, et est parallèle aux guides d'onde principal 10p et additionnel 10a. Le guide d'onde additionnel 10a présente également un profil de dopage (jonction pn) symétrique à celui du guide d'onde principal 10p.

Concernant maintenant le guide d'onde additionnel 10a :
- la nervure 11a présente une largeur wₙ et une épaisseur eₙ identiques à celles de la nervure 11p. La jonction pn se situe ici également au centre de la nervure, mais le profil de dopage est inversé vis-à-vis de celui du guide d'onde principal 10p ;
- une première partie latérale intermédiaire 12a.1, qui s'étend à partir de la nervure 11a, dopée ici de type p, d'épaisseur eₚᵢ et de largeur wₚᵢ₁ ; suivie par une première partie latérale de contact 13a.1, dopée ici p+, d'épaisseur e_{pc1} et de largeur w_{pc1}, au contact de laquelle vient un via conducteur 34 connecté à la deuxième piste latérale 32 ;
- une deuxième partie latérale intermédiaire 12a.2, qui s'étend à partir de l'autre côté de la nervure 11p, dopée ici de type n, d'épaisseur eₚᵢ et de largeur wₚᵢ₂ ; suivie par une deuxième partie latérale de contact 13a.2, dopée ici n+, d'épaisseur e_{pc2} et de largeur w_{pc2}, au contact de laquelle vient un via conducteur 34 connecté à la piste centrale 33. Notons que les parties latérales de contact 13a.2 et 13p.2 sont confondues : il s'agit de la même portion de la couche semiconductrice 52.

La ligne coplanaire RF 30 repose sur une couche d'encapsulation 53 réalisée en un matériau électriquement isolant présentant un indice de réfraction inférieur à celui de la couche semiconductrice 52. Les pistes conductrices 31, 32, 33 sont électriquement connectées aux parties latérales de contact respectives 13p.1, 13a.1 et 13a/p.2 par des vias conducteurs 34 qui traversent la couche d'encapsulation 53.

La piste centrale 33 présente avantageusement deux branches symétriques vis-à-vis du plan Ps, de largeur wₛ à partir du via 34. De même, la piste latérale 31 présente une branche interne de largeur w_{g}, à partir du via 34, orientée vers la piste centrale 33, tout comme la piste latérale 32. Ainsi, la piste centrale 33 et son via 34 sont avantageusement symétriques vis-à-vis plan de symétrie Ps. Les vias 34 des pistes latérales 31 et 32 sont avantageusement symétriques vis-à-vis du plan Ps. Les branches internes des pistes latérales 31 et 32 sont également avantageusement symétriques vis-à-vis du plan Ps.

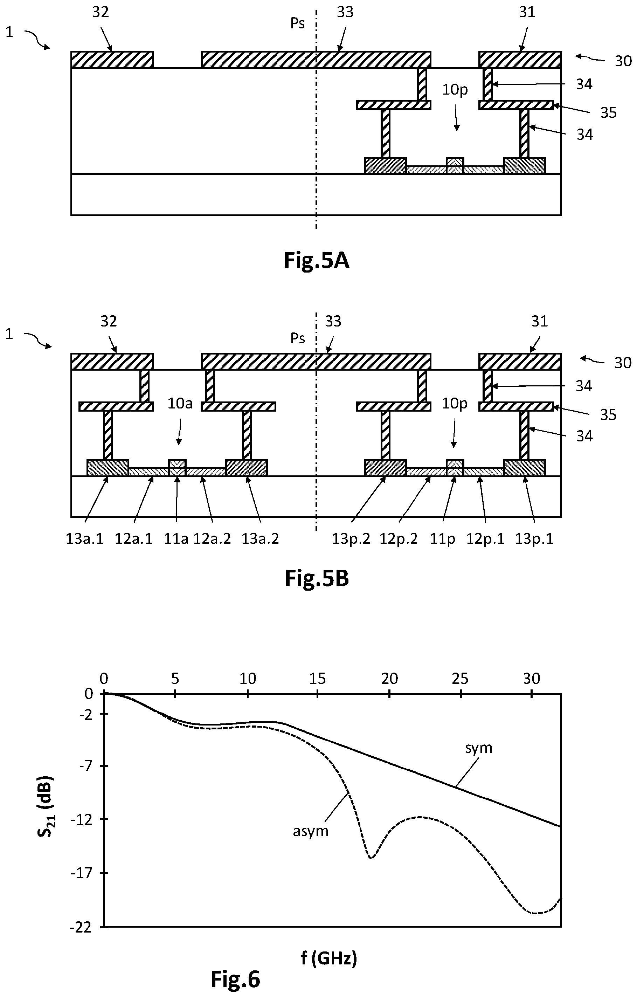

Les figures 5A et 5B sont des vues schématiques et partielles, en coupe transversale, d'une partie d'un modulateur de Mach-Zehnder, qui ne comporte pas de guide d'onde additionnel dans le cas de la fig.5A (modulateur selon l'art antérieur), et qui comporte un guide d'onde additionnel dans le cas de la fig.5B (modulateur selon l'invention).

En référence à la fig.5A, le modulateur de Mach-Zehnder 1 comporte un guide d'onde principal 10p présentant une jonction pn, laquelle est polarisée par une tension de commande appliquée à partir des pistes centrale 33 et latérale 31, via les parties latérales de contact 13p.1, 13p.2 et les parties latérales intermédiaires 12p1, 12p.2. Dans cet exemple, chaque piste conductrice est connectée à la partie latérale de contact correspondante par plusieurs vias 34 connectés par une piste intercalaire de connexion 35. Le modulateur 1 ne comporte donc pas de guide d'onde additionnel 10a.

En référence à la fig.5B, le modulateur de Mach-Zehnder 1 est identique à celui de la fig.5A, mais comporte un guide d'onde additionnel 10a au sens de l'invention, c'est-à-dire qu'il présente un positionnement vis-à-vis de la piste centrale 33, un dimensionnement et un profil de dopage symétriques à ceux du premier guide d'onde principal 10p, par rapport au plan de symétrie Ps. Ici, les parties latérales de contact 13p.2 et 13a.2 sont distinctes.

Les modulateurs des fig.5A et 5B sont réalisés en technologie silicium. La couche support et la couche d'encapsulation sont réalisées en un oxyde de silicium, et les guides d'onde 10p, 10a ainsi que les parties latérales sont réalisées en silicium cristallin. Les pistes 31, 32, 33, les vias 34 et les pistes de connexion 35 sont réalisés en au moins un matériau métallique.

La figure 6 illustre le spectre en transmission de la ligne coplanaire RF 30 des modulateurs de Mach-Zehnder des fig.5A et 5B.

Dans le cas de la configuration asymétrique (trait pointillé) du modulateur de la fig.5A, la réponse spectrale montre la présence de plusieurs creux de transmission dans la bande spectrale allant de 0 à 32 GHz. Comme mentionné précédemment, la présence de ces creux de transmission provient de l'environnement asymétrique, en termes de permittivité, dans lequel se propage le mode de propagation du champ électrique généré par la ligne coplanaire RF.

En revanche, dans le cas de la configuration symétrique (trait continu) du modulateur de la fig.5B, la réponse spectrale montre une absence de ces creux de transmission. Cela provient du fait que le mode du champ électrique se propage dans un environnement symétrique de part et d'autre de la piste centrale 33. Ainsi, les performances de la ligne coplanaire RF, et donc celles du modulateur sont améliorées.

Des modes de réalisation particuliers viennent d'être décrits. Différentes variantes et modifications apparaîtront à l'homme du métier.

## Revendications

1. Modulateur électro-optique de Mach-Zehnder (1), comportant :
∘ un diviseur d'entrée (2) ;
∘ des premier et deuxième guides d'onde dits principaux (10p, 20p), couplés au diviseur d'entrée (2), dont au moins le premier guide d'onde principal (10p) comporte un profil de dopage formant une jonction semiconductrice ou une capacité MOS, s'étendant longitudinalement dans un plan principal (XY) du modulateur (1) ;
∘ un combineur de sortie (3), couplé aux deux guides d'onde principaux (10p, 20p) ;
∘ au moins une première ligne coplanaire RF (30), associée au premier guide d'onde principal (10p), formée de trois pistes conductrices (31, 32, 33), coplanaires, et parallèles au premier guide d'onde principal (10p) : une piste centrale (33) et une première et une deuxième pistes latérales (31, 32) situées de part et d'autre de la piste centrale (33), le premier guide d'onde principal (10p) étant situé entre la piste centrale (33) et la première piste latérale (31) ;
o **caractérisé en ce qu'**il comporte un premier guide d'onde additionnel (10a) :
• s'étendant de manière parallèle au premier guide d'onde principal (10p) ;
• non couplé au diviseur d'entrée (2) et au combineur de sortie (3) ;
• situé en regard et entre la piste centrale (33) et la deuxième piste latérale (32) ;
• présentant un positionnement vis-à-vis de la piste centrale (33), un dimensionnement et un profil de dopage symétriques à ceux du premier guide d'onde principal (10p), par rapport à un plan de symétrie (Ps), orthogonal au plan principal (XY), parallèle aux premiers guides d'onde principal (10p) et additionnel (10a), et passant par un centre de la piste centrale (33).

2. Modulateur (1) selon la revendication 1, dans lequel la piste centrale (33) est symétrique vis-à-vis du plan de symétrie (Ps).

3. Modulateur (1) selon la revendication 1 ou 2, dans lequel les pistes latérales (31, 32) sont symétriques par rapport au plan de symétrie (Ps).

4. Modulateur (1) selon l'une quelconque des revendications 1 à 3, dans lequel les premiers guides d'onde principal (10p) et additionnel (10a) sont des guides d'onde à nervure (11p, 11a).

5. Modulateur (1) selon l'une quelconque des revendications 1 à 4, comportant, pour les premiers guides d'onde principal (10p) et additionnel (10a), des parties latérales s'étendant à partir des nervures (11p, 11a), réalisées en le même matériau semiconducteur dopé que les nervures, et destinées à polariser la jonction semiconductrice ou la capacité mos, les parties latérales associées au guide d'onde additionnel (10a) présentant un positionnement, un dimensionnement et un profil de dopage symétriques à celles associées au premier guide d'onde principal (10p) par rapport au plan de symétrie (Ps).

6. Modulateur (1) selon l'une quelconque des revendications 1 à 5, comportant en outre une deuxième ligne coplanaire RF (40) associée au deuxième guide d'onde principal (20p), et un deuxième guide d'onde additionnel (20a) : s'étendant de manière parallèle au deuxième guide d'onde principal (20p) ; non couplé au diviseur d'entrée (2) et au combineur de sortie (3) ; situé en regard et entre une piste centrale et une deuxième piste latérale de la deuxième ligne coplanaire RF (40) ; présentant un positionnement vis-à-vis de la piste centrale de la deuxième ligne coplanaire RF (40), un dimensionnement et un profil de dopage symétriques à ceux du deuxième guide d'onde principal (20p), par rapport à un plan de symétrie, orthogonal au plan principal (XY), parallèle aux deuxièmes guides d'onde principal (20p) et additionnel (20a), et passant par un centre de la piste centrale de la deuxième ligne coplanaire RF (40).

7. Modulateur (1) selon l'une quelconque des revendications 1 à 6, dans lequel les premiers guides d'onde principal (10p) et additionnel (10a) comportent chacun une jonction pn.

8. Modulateur (1) selon l'une quelconque des revendications 1 à 7, dans lequel les guides d'onde principaux et additionnel(s) sont réalisés à partir de silicium.
